# EUROPÄISCHE PATENTSCHRIFT

(11) **EP 1 785 238 B1**
(45) Veröffentlichungstag und Bekanntmachung des Hinweises auf die Patenterteilung: **26.11.2008**
(21) Anmeldenummer: 06020300.7
(22) Anmeldetag: 27.09.2006
(51) Int. Cl.: B25J 15/04

(54) **Lösbare Verbindung mit einem Dauermagneten und einem Elektromagneten zwischen einer Greiferbacke und einem Greifmittel in einer Spann- oder Greifeinrichtung**
Releasable connection between a gripping jaw and a gripping element in a clamping or gripping assembly, comprising a permanent magnet and an electromagnet
Connection libérable entre une mâchoire et un moyen de préhension dans un dispositif de serrage ou de préhension, comprenant un aimant permanent et un électroaimant

(30) Priorität: 28.10.2005 DE 102005052627
(43) Veröffentlichungstag der Anmeldung: 16.05.2007
(73) Patentinhaber: Schunk GmbH & Co. KG Spann- und Greiftechnik, 74348 Lauffen (DE)
(72) Erfinder: Jesser, Markus, 74363 Güglingen (DE)
(74) Vertreter: Bulling, Alexander

(56) Entgegenhaltungen:
- DE-U1- 20 018 124
- US-A- 5 947 539

## Beschreibung

Die Erfindung betrifft eine Greiferbacke gemäß dem oberbegiff des Anspruch 1. Die Erfindung betrifft auch eine Greiferbacke mit einem Greifmittel für eine derartige Greiferbacke sowie eine Greif- oder Spanneinrichtung, umfassend eine solche Greiferbacke. Der Einfachheit halber ist in der Erfindung nur von einer Greiferbacke und einem Greifmittel die Rede, wobei von der Erfindung genauso eine Spannbacke und ein zugehöriges Spannmittel umfasst sein soll.

Aus dem Stand der Technik sind Greiferbacken mit Verbindungsmitteln zur lösbaren Anordnung eines Greifmittels bekannt geworden, bei denen die Verbindungsmittel beispielsweise von Befestigungsschrauben gebildet werden. Ein Austauschen der Greiferbacken ist bei einem derartigen Stand der Technik vergleichsweise aufwändig.

In der gattungbildenden US 5,947,539 werden Permanentmagneten zur Halterung von Greifbacken an Grundbacken einer Greifvorrichtung verwendet.

Aus der DE 200 18 124 U1 ist ein Werkzeugwechselsystem und Kupplungssystem bekannt geworden, bei dem ein Permanentmagnet und ein Elektromagnet derart wirkverbunden sind, dass zur Lösung der Kupplung die Polung des Elektromagneten so geschalten wird, dass die Wirkung des Permanentmagneten behindert und die Kupplung gelöst wird. Der vorliegenden Erfindung liegt die Aufgabe zugrunde, eine kompakt gebaute Greiferbacke, gegebenenfalls mit einem Greifmittel sowie eine zugehörige Greif-oder Spannvorrichtung bereitzustellen, bei der ein Austausch des Greifmittels auf einfache Art und Weise, möglichst automatisiert, möglich ist.

Diese Aufgabe wird durch eine Greiferbacke mit den Merkmalen des Anspruchs 1 gelöst.

Die Erfindung hat den Vorteil, dass ohne Verwendung von Strom ein sicheres Anordnen des Greifmittels an der Greiferbacke aufgrund des vorgesehenen Dauermagneten möglich ist. Für einen Wechsel eines an der Greiferbacke angeordneten Greifmittels wird der Elektromagnet bestromt, so dass er das Magnetfeld des Dauermagneten so weit kompensiert, dass ein Lösen des Greifmittels möglich wird. Vorteilhafterweise erfolgt die Kompensation des Magnetfelds des Dauermagneten vollständig. Allerdings kann auch schon eine teilweise Kompensation des Magnetfelds ausreichend sein, beispielsweise eine so weit gehende Kompensation, dass das Greifmittel aufgrund seines Eigengewichts aus dem dann teilkompensierten Magnetfeld des Dauermagneten entweichen kann.

Besonderer Vorteil der Erfindung ist, dass zur Befestigung des Greifmittels an der Greiferbacke kein Strom benötigt wird. Insofern wirkt sich ein Stromausfall nicht negativ auf den Betrieb der Greiferbacke aus.

Die Erfindung sieht ferner vor, dass der Elektromagnet mit seinen Polen zwischen mit den entsprechenden Polen des Dauermagneten zusammenwirkenden Feldleitern angeordnet ist. Denkbar ist dabei, dass Feldleiter vorgesehen sind, die die Pole des Dauermagneten an die Stelle verlegen, die für das Greifmittel zugänglich ist. Zwischen den Feldleitern, und damit zwischen den Polen des Dauermagneten, kann der Elektromagnet so angeordnet werden, dass die Pole des bestromten Elektromagneten das von den Feldleitern erzeugte Magnetfeld entsprechend kompensieren. Eine derartige Anordnung baut vergleichsweise klein und weist dennoch einen hohen Wirkungsgrad auf.

Das Greifmittel kann dabei beispielsweise ein Greiffinger zum unmittelbaren Greifen oder Spannen eines Werkstücks sein. Gemäß der Erfindung ist ebenfalls denkbar, dass das Greifmittel selbst als Adapterstück oder Zwischenbacke ausgebildet ist, beispielsweise zur Anordnung zwischen die Greiferbacke und einen entsprechenden Greiffinger.

Gemäß einer Weiterbildung der Erfindung ist denkbar, dass die Greiferbacke eine Aussparung zur Aufnahme des Dauermagneten und des Elektromagneten aufweist. Hierdurch kann ein betriebssicheres Anordnen der beiden Magnete in der Greiferbacke erreicht werden.

Vorteilhaft ist, wenn die Aussparung lediglich auf der dem Greifmittel zugewandten Seite offen ist und wenn der Dauermagnet oder mit den Polen des Dauermagneten zusammenwirkende Feldleiter bündig mit der offenen Seite der Aussparung abschließen oder über diese herausragen. Hierdurch wird ein optimales Magnetfeld bereitgestellt, das mit dem Greifmittel zusammenwirken kann. Gerade dann, wenn die Pole des Dauermagneten, beziehungsweise mit den Polen des Dauermagneten verbundene Feldleiter über die Aussparung herausragen, können diese herausragenden Abschnitte zur unmittelbaren Anlage des Greifmittels dienen.

Gemäß der Erfindung kann selbstverständlich vorgesehen sein, dass die Bestromung des Elektromagneten über Kabel erfolgt, die die einer Bewegung der Greiferbacke, beziehungsweise einer zugehörigen Greif- oder Spannvorrichtung, folgen.

Gemäß einer weiteren vorteilhaften Ausgestaltung der Erfindung sind an der Greiferbacke Kontaktmittel vorgesehen, über die eine Bestromung des Elektromagneten erfolgen kann. Die Kontaktmittel können dabei derart angeordnet sein, dass sie beispielsweise für feststehende Gegenkontakte frei zugänglich sind. Eine Bestromung des Elektromagneten erfolgt dann, wenn das Greifmittel gelöst werden soll. Beispielsweise ist denkbar, dass die Greiferbacke, beziehungsweise die Greif- oder Spannvorrichtung, die eine derartige Greiferbacke aufweist, über ein entsprechendes Handhabungsgerät in ein Greifmittelmagazin bewegt wird. Dort können fest angeordnete Gegenkontakte vorgesehen sein, die beim Bewegen der Greiferbacke in das Greifmittelmagazin mit den Kontaktmitteln der Greiferbacke zusammenkommen. Hierdurch kann eine Bestromung des Elektromagneten dann erreicht werden, wenn ein Lösen des Greifmittels gewollt ist. Eine derartige Greiferbacke ist deshalb vorteilhaft, weil keine Kabel für die Bestromung des Elektromagneten mitgeführt werden müssen. Die Bestomung erfolgt von extern, beispielsweise bei Einfahren der Greiferbacke in ein Greifmittelmagazin.

Dabei kann vorgesehen sein, dass die Kontaktmittel derart bedingt bewegbar und insbesondere federvorgespannt angeordnet sind, dass sie der Bewegungsbahn der Greiferbacke, beziehungsweise der zugehörigen Greif- oder Spannvorrichtung, wenigstens so weit folgen können, bis die Greiferbacke eine kritischen Abstand zum Greifmittel erreicht hat, bei dessen Überschreiten das Greifmittel nicht mehr vom Dauermagneten angezogen wird. Dies ist deshalb vorteilhaft, weil damit gewährleistet wird, dass beim Wegbewegen der Greiferbacke vom Greifmittel die Bestromung des Elektromagneten nicht zu frühzeitig abgebrochen wird, wobei ein zu frühzeitiges Abbrechen der Bestromung ein ungewolltes Anziehen des Greifmittels an die Greiferbacke zur Folge haben kann.

Derart bedingt bewegbare Kontaktmittel können beispielsweise federvorgespannte Kontaktpins sein, die beispielsweise entgegen einer Federkraft in das Grundgehäuse der Greiferbacken eindrückbar sind.

Erfindungsgemäß kann selbstverständlich auch vorgesehen sein, dass greifmittelmagazinseitig vorgesehene bedingt bewegbare und federvorgespannte Kontaktmittel, insbesondere in Form von federvorgespannten Kontaktpins, vorgesehen sind. Die Greiferbacke muss dann lediglich für derartige Kontaktmittel vorgesehene Kontaktmittel, beispielsweise in Form von Kontaktstellen aufweisen.

Erfindungsgemäß ist ferner vorteilhaft, wenn an der Greiferbacke und/oder am Greifmittel Zentriermittel zur gegenseitigen positionsgenauen Anordnung vorgesehen sind. Durch derartige Zentriermittel, die beispielsweise als Zentrierstifte beziehungsweise zugehörige Zentrieraussparungen ausgebildet sein können, wird gewährleistet, dass das Greifmittel eine genau bestimmte relative Lage zur Greiferbacke einnimmt.

Denkbar ist auch, dass Greifmittel zum Greifen oder Spannen von Werkstücken, insbesondere Greiffinger oder Zwischenbacke, zur Anordnung an eine Grundbacke nach einem der vorhergehenden Ansprüche, welches einen ferromagnetischen Halteabschnitt zum Zusammenwirken mit dem Dauermagneten aufweist. Die einzelnen Bauteile können dabei beispielsweise in einem gemeinsamen Gehäuse oder in einer gemeinsamen Vergussmasse untergebracht sein.

Die eingangs genannte Aufgabe wird auch durch eine Greiferbacke mit einen Greifmittel zum Greifen oder Spannen von Werkstücken, insbesondere in Form eines Greiffingers oder einer Zwischenbacke, gelöst, das zur Anordnung an die erfindungsgemäße Greiferbacke vorgesehen ist, wobei das Greifmittel einen ferromagnetischen Halteabschnitt zum Zusammenwirken mit dem Dauermagneten aufweist. Das Greifmittel kann dabei insgesamt aus einem ferromagnetischen Material, beispielsweise aus Eisen, sein. Das Greifmittel kann aber auch aus einem nicht eisenhaltigen Material, wie beispielsweise Aluminium, sein, wobei dann der Halteabschnitt als Metallplatte, und insbesondere als Stahlplatte ausgebildet sein kann.

Ferner wird die eingangs genannte Aufgabe durch eine Greif-oder Spanneinrichtung gelöst, die insbesondere als Linear-, Winkel-, Radial- oder Zentrischgreifer ausgebildet sein kann, und wenigstens eine beweglich geführte, erfindungsgemäße Greiferbacke aufweist. Die Greiferbacke kann dabei eine in einem Grundgehäuse der Spann- oder Greifeinrichtung entlang einer Linie geführte Grundbacke oder auch eine auf einer derart geführten Grundbacke aufsetzbare Aufsatzbacke sein.

Weitere Einzelheiten und vorteilhafte Ausgestaltungen der Erfindung sind der nachfolgenden Beschreibung zu entnehmen, in der die Erfindung anhand des in den Figuren dargestellten Ausführungsbeispiels näher beschrieben und erläutert ist.

Es zeigen:
- Figur 1: eine teilweise aufgeschnittene Seitenansicht einer Greifvorrichtung mit einer erfindungsgemäßen Greiferbacke; und
- Figur 2: eine Vergrößerung des Schnitts gemäß Figur 1.

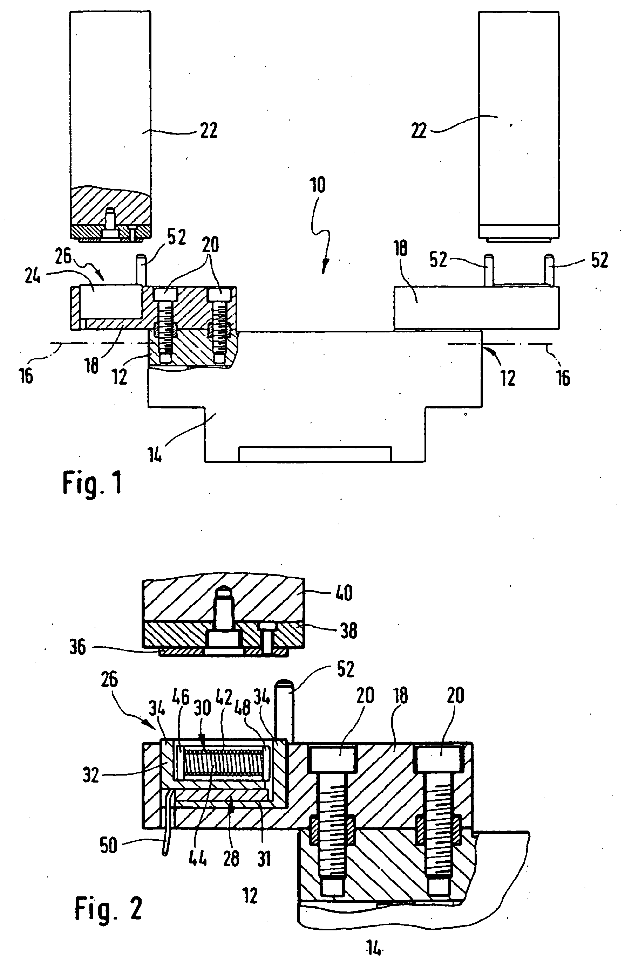

In der Figur 1 ist eine Greifvorrichtung 10 in Form eines zwei aufeinander zu und voneinander weg bewegbare Grundbacken 12 aufweisenden Parallelgreifers dargestellt. Die Grundbacken 12 sind dabei in einem Grundgehäuse 14 entlang der Bewegungsachse 16 geführt angeordnet. Auf den beiden Grundbacken 12 ist jeweils eine Aufsatzbacke 18 über Befestigungsschrauben 20 angeordnet. An den Aufsatzbacken 18 ist jeweils ein Greifmittel 22 beispielsweise in Form eines Greiffingers oder eines Adapterelements für einen entsprechenden Greiffinger anordenbar.

Die Aufsatzbacken 18 weisen jeweils eine Aussparung 24 auf, die auf der dem jeweils zugehörigen Greifmittel 22 zugewandten Seite offen sind. Die Aussparungen 24 beherbergen jeweils eine Magnetanordnung 26, die in der Figur 2 im Schnitt dargestellt ist. Die Magnetanordnung 26 umfasst einen Dauermagneten 28 sowie einen Elektromagneten 30. Insgesamt ist die Anordnung der beiden Magnete 26, 28 derart, dass bei unbestromten Elektromagnet über das Magnetfeld des Dauermagneten 28 das Greifmittel 22 an der Aufsatzbacke 18 gehalten wird. Beim Bestromen des Elektromagneten 30 kompensiert das Magnetfeld des Elektromagneten 30 das Magnetfeld des Dauermagneten 28 wenigstens weitgehend. Aufgrund der Kompensation der Magnetfelder kann dann das Greifmittel 22 von der Aufsatzbacke 18 ohne Bereitstellung hoher Lösekräfte entfernt werden.

Wie der Figur 2 entnommen werden kann, liegen an den Polen des Dauermagneten 28 zwei im Schnitt L-förmig ausgebildete Feldleiter 31, 32 an. Über die Feldleiter 32, 31 werden die Pole des Dauermagneten 28 an die aus der Aussparung 24 herausragenden freien Seiten 34 der Feldleiter 31, 32 verlegt. Bei an der Aufsatzbacke 18 angeordnetem Greifmittel 22 wirken die Außenpole bildenden freien Seiten 34 der Feldleiter 31, 32 mit einem ferromagnetischen Halteabschnitt 36 des Greifmittels 22 zusammen. Vorteilhafterweise liegen die freien Seiten 34 bei aufgesetzten Greifmitteln 22 unmittelbar am Halteabschnitt 36 an. Der Halteabschnitt 36 kann dabei, wie aus Figur 2 deutlich wird, an einer Adapterplatte 38 angeordnet sein, die ihrerseits an einem Greifmittelgrundteil 40 befestigt ist. Wie insbesondere aus Figur 2 deutlich wird, überragen die freien Seiten 34 der Feldleiter 31, 32 die Oberseite 43 der Aufsatzbacke 18 geringfügig. Dadurch wird gewährleistet, dass der Halteabschnitt 36, der beispielsweise als Metallplatte oder Stahlplatte ausgebildet sein kann, zum Anliegen an die freien Seiten 34 kommt.

Der Elektromagnet 30, der eine Spule 42, einen Kern 44 sowie zwei Polköpfe 46,48 aufweist, ist zwischen den beiden Außenpolen beziehungsweise den freien Seiten 34 der Feldleiter 31, 32 angeordnet. Die Bestromung des Elektromagneten 30 erfolgt dabei derart, dass eine Kompensation des Magnetfelds des Dauermagneten 28, beziehungsweise dessen an den freien Seiten 34 der Feldleiter 31, 32 liegenden Außenpolen erreicht wird. Durch Bestromen des Elektromagneten 30 kann folglich das Greifmittel 22 von der Aufsatzbacke 18 entfernt werden.

Bei der Ausführungsform gemäß der Figur 1 und 2 wird der Elektromagnet 30 über ein Kabel 50 mit Strom versorgt. Gemäß einer anderen, nicht dargestellten Ausführungsform der Erfindung ist denkbar, dass an der Aufsatzbacke 18 federbeaufschlagte Kontaktpins vorgesehen sind, die beim Bewegen der Greifvorrichtung 10 in ein Greifmittelmagazin von entsprechenden, fest angeordneten Gegenkontakten beaufschlagt werden. Ebenso wäre denkbar, die federbeaufschlagten Kontaktpins magazinseitig und greiferseitig lediglich Kontaktstellen vorzusehen. Derartige Ausführungsformen haben den Vorteil, dass die Stromzuführung nicht mit der Aufsatzbacke 18, beziehungsweise der Greifvorrichtung 10, mitgeführt werden muss.

An den Aufsatzbacken 18 sind senkrecht zur Bewegungsachse 16 der Grundbacken 12 angeordnete Zentrierstifte 52 angeordnet, die in an den Greifmitteln 22 komplementär hierzu vorgesehnen Zentrieraussparungen zusammenwirken. Dadurch wird gewährleistet, dass die Greifmittel 22 in einer vorgegebenen Lage an den Aufsatzbacken 18 befestigt werden.

Erfindungsgemäß muss die Magnetanordnung 26 nicht zwangsweise an der Aufsatzbacke 18 angeordnet sein; vielmehr kann erfindungsgemäß vorgesehen sein, dass die Magnetanordnung 26 direkt in der Grundbacke 12 der Greifvorrichtung 10 vorgesehen ist.

## Patentansprüche

1. Greiferbacke (18), insbesondere Grund- oder Aufsatzbacke, die von einer Spann- oder Greifeinrichtung (10) entlang einer Linie (16) bewegbar ist, umfassend Verbindungsmittel zur lösbaren Anordnung eines Greifmittels (22) an der Greiferbacke (18), wobei die Verbindungsmittel wenigstens einen Dauermagneten (28) umfassen, **dadurch gekennzeichnet, dass** die Verbindungsmittel auch wenigstens einen bestrombaren Elektromagneten (30) derart umfassen, dass bei unbestromtem Elektromagneten (3Q) das Greifmittel (22) durch das Magnetfeld des Dauermagneten (28) an der Greiferbacke (18) gehalten wird und dass bei Bestromung des Elektromagneten (30) das Magnetfeld des Dauermagneten (28) zum Lösen des Greifmittels kompensiert wird, wobei der Elektromagnet (30) mit seinen Polen (46, 48) zwischen mit den entsprechenden Polen des Dauermagneten zusammenwirkenden Feldleitern (31, 32) angeordnet ist.

2. Greiferbacke (18) nach Anspruch 1, **dadurch gekennzeichnet, dass** die Greiferbacke (18) eine Aussparung (24) zur Aufnahme des Dauermagneten (28) und des Elektromagneten (30) aufweist.

3. Greiferbacke (18) nach Anspruch 2, **dadurch gekennzeichnet, dass** die Aussparung (24) lediglich auf der dem Greifmittel (22) zugewandten Seite offen ist und dass der Dauermagnet (28) oder mit den Polen des Dauermagneten zusammenwirkende Feldleiter (31, 32) bündig mit der offen Seite der Aussparung (24) abschließen oder über diese herausragen.

4. Greiferbacke (18) nach einem der vorhergehenden Ansprüche, **dadurch gekennzeichnet, dass** an der Greiferbacke (18) Kontaktmittel vorgesehen sind, über die eine Bestromung des Elektromagneten erfolgen kann.

5. Greiferbacke (18) nach Anspruch 4, **dadurch gekennzeichnet, dass** die Kontaktmittel derart bedingt bewegbar und insbesondere federvorgespannt angeordnet sind, dass sie der Bewegungsbahn der Greiferbacke (18), und/oder bei einer an einer Greif- oder Spannvorrichtung (10) angeordneten Greiferbacke der Bewegungsbahn der Greif- oder Spannvorrichtung (10), wenigstens soweit folgen können, bis die Greiferbacke (18) einen kritischen Abstand zum Greifmittel (22) erreicht hat, bei dessen Überschreiten das Greifmittel (22) nicht mehr vom Dauermagneten (28) angezogen wird.

6. Greiferbacke (18) nach einem der vorhergehenden Ansprüche, **dadurch gekennzeichnet, dass** an der Greiferbacke (18) und/oder am Greifmittel (22) Zentriermittel zur gegenseitigen positionsgenauen Anordnung vorgesehen sind.

7. Greiferbacke (18) nach einem der vorhergehenden Ansprüche, **dadurch gekennzeichnet, dass** der Dauermagnet (28), der Elektromagnet (30) und gegebenenfalls zugehörige Feldleiter (31, 32) als separat handhabbare Baugruppe miteinander verbunden sind. Greiferbacke (18) nach einem der vorhergehenden Ansprüche mit einem

8. Greifmittel (22) zum Greifen oder Spannen von Werkstücken, insbesondere Greiffinger oder Zwischenbacke, zur Anordnung an die Greiferbacke (18), wobei das Greifunifel (22) einen ferromagnetischen Halteabschnitt (36) zum Zusammenwirken mit dem Dauermagneten (28) aufweist. Greiferbacke (18) mit einem

9. Greifmittel (22) nach Anspruch 8, **dadurch gekennzeichnet, dass** der Halteabschnitt (36) des Greifumittals (22) als Metallplatte und insbesondere als Stahlplatte ausgebildet ist.

10. Greif- oder Spanneinrichtung (10), insbesondere Linear- oder Zentrischgreifer, mit wenigstens einer beweglich geführten Greiferbacke (18) nach einem der Ansprüche 1 bis 7 und/oder einen Greiferbacke (18) mit einem Greifmittel (22) nach einem der Ansprüche 8 oder 9.

11. Greif- oder Spanneinrichtung (10), nach Anspruch 10, **dadurch gekennzeichnet, dass** die Greiferbacke eine in einem Grundgehäuse der Spann- oder Greifeinrichtung entlang einer Linie geführten Grundbacke (12) oder eine auf einer derart geführten Grundbacke (12) aufsetzbare Aufsatzbacke (18) ist.

## Claims

1. A gripping jaw (18), in particular a base or cap jaw, which can be moved by a clamping or gripping arrangement (10) along a line (16), and comprising connecting means for the releasable arrangement of gripping means (22) on the gripping jaw (18), wherein the connecting means comprise at least one permanent magnet (28), **characterized in that** the connecting means also comprise at least one electromagnet (30), which can be charged with an electrical current in such a way that, when the electromagnet (30) is not charged with an electrical current, the gripping means (22) is maintained on the gripping jaw (18) by the magnetic field of the permanent magnet (28), and that, when the electromagnet (30) is charged with an electrical current, the magnetic field of the permanent magnet (28) is compensated for releasing the gripping means, wherein the electromagnet (30) is arranged with its poles (46, 48) between field conductors (31, 32), which cooperate with the corresponding poles of the permanent magnet.

2. The gripping jaw (18) in accordance with claim 1, **characterized in that** the gripping jaw (18) has a recess (24) for receiving the permanent magnet (28) and the electromagnet (30).

3. The gripping jaw (18) in accordance with claim 2, **characterized in that** the recess (24) is only open on the side facing the gripping means (22), and that the permanent magnet (28), or field conductors (31, 32) cooperating with the poles of the permanent magnet, terminate flush with the open side of the recess (24), or project past it.

4. The gripping jaw (18) in accordance with one of the preceding claims, **characterized in that** contact means are provided on the gripping jaw (18), through which the supply of electrical current for the electromagnet can be provided.

5. The gripping jaw (18) in accordance with claim 4, **characterized in that** the contact means are movable in a limited way in such a way and are in particular arranged in a manner prestressed by a spring, that they can follow the movement path of the gripping jaw (18) and/or, in case of a gripping jaw arranged on a gripping or clamping arrangement (10), the movement path of the gripping or clamping arrangement (10), at least until the gripping jaw (10) has reached a critical distance from the gripping means (22) that, when it is exceeded, the gripping means (22) is no longer attracted by the permanent magnet (28).

6. The gripping jaw (18) in accordance with one of the preceding claims, **characterized in that** centering means for mutual positionally accurate arrangement are provided on the gripping jaw (18) and/or at the gripping means (22) .

7. The gripping jaw (18) in accordance with one of the preceding claims, **characterized in that** the permanent magnet (28), the electromagnet (30) and possibly the field conductors (31, 32) are connected with each other in the form of components, which can be separately manipulated.

8. The gripping jaw (18) in accordance with one of the preceding claims, having gripping means (22) for gripping or clamping of workpieces, in particular gripping fingers or intermediate jaws, for arrangement on the gripping jaw (18), wherein the gripping means (22) have a ferromagnetic holding section (36) for working together with the permanent magnet (28).

9. The gripping jaw (18) with gripping means (22) in accordance with claim 8, **characterized in that** the holding section (36) of said gripping means (22) is embodied as a metal plate, and in particular as a steel plate.

10. The gripping or clamping arrangement (10), in particular a linear or centralized gripper, having at least one movably guided gripping jaw (18), in accordance with one of claims 1 to 7, and/or a gripping jaw (18) with gripping means (22) in accordance with one of claims 8 or 9.

11. The gripping or clamping arrangement (10) in accordance with claim 10, **characterized in that** the gripping jaw is a base jaw (12), which is conducted in a base housing of the clamping or gripping arrangement along a line, or a cap jaw (18), which can be placed on a base jaw (12) guided in such a way.

## Revendications

1. Mâchoire de préhension (18), en particulier mâchoire de base ou mâchoire rapportée, qui peut être déplacée le long d'une ligne (16) par un dispositif de serrage ou de préhension (10), comprenant des moyens de liaison pour l'agencement amovible d'un moyen de préhension (22) sur la mâchoire de préhension (18), les moyen de liaison comprenant au moins un aimant permanent (28), **caractérisée en ce que** les moyens de liaison comprennent également au moins un électroaimant (30) pouvant être mis sous tension de telle manière que lorsque l'électroaimant (30) est hors tension, le moyen de préhension (22) est maintenu sur la mâchoire de préhension (18) par le champ magnétique de l'aimant permanent (28), et lorsque l'électroaimant (30) est sous tension, le champ magnétique de l'aimant permanent (28) est compensé pour libérer le moyen de préhension, l'électroaimant (30) étant agencé avec ses pôles (46, 48) entre des conducteurs de champ (31, 32) interagissant avec les pôles correspondant de l'aimant permanent.

2. Mâchoire de préhension (18) selon la revendication 1, **caractérisée en ce que** la mâchoire de préhension (18) présente un évidement (24) destiné au logement de l'aimant permanent (28) et de l'électroaimant (30)

3. Mâchoire de préhension (18) selon la revendication 1, **caractérisée en ce que** la mâchoire de préhension (18) n'est ouverte que sur le côté faisant face au moyen de préhension (22), et **en ce que** l'aimant permanent (28) ou les conducteurs de champ (31, 32) interagissant avec les pôles de l'aimant permanent sont en affleurement avec le côté ouvert de l'évidement (24) ou en dépassent vers l'extérieur.

4. Mâchoire de préhension (18) selon une des revendications précédentes, **caractérisée en ce que** sur la mâchoire de préhension (18) sont prévus des moyens de contact par l'intermédiaire desquels peut être effectuée une mise sous tension de l'électroaimant.

5. Mâchoire de préhension (18) selon la revendication 4, **caractérisée en ce que** les moyens de contact sont agencés pour être jusqu'à un certain point mobiles, et en particulier précontraints par ressort, de telle manière qu'ils peuvent suivre la trajectoire de déplacement de la mâchoire de préhension (18), et/ou la trajectoire de déplacement du dispositif de préhension ou de serrage (10) dans le cas d'une mâchoire de préhension (18) agencée sur un dispositif de préhension ou de serrage (10), jusqu'au point où la mâchoire de préhension (18) a atteint une distance critique par rapport au moyen de préhension (22), dont le dépassement fait que le moyen de préhension n'est plus serré par l'aimant permanent (28).

6. Mâchoire de préhension (18) selon une des revendications précédentes, **caractérisée en ce que** sur la mâchoire de préhension (18) et/ou sur le moyen de préhension (22) sont prévus des moyens de centrage assurant un agencement dans des positions mutuelles précises.

7. Mâchoire de préhension (18) selon une des revendications précédentes, **caractérisée en ce que** l'aiment permanent (28), l'électroaimant (30) et les conducteurs de champ (31, 32) le cas échéant correspondants sont reliés les uns aux autres sous la forme de modules pouvant être manipulés séparément.

8. Mâchoire de préhension (18) selon une des revendications précédentes, comportant un moyen de préhension (22) pour la préhension ou le serrage de pièces, en particulier un doigt de préhension ou une mâchoire intermédiaire, destiné à être agencé sur la mâchoire de préhension (18), le moyen de préhension (22) présentant une section de retenue ferromagnétique (36) pour son interaction avec l'aimant permanent (28).

9. Mâchoire de préhension (18) comportant un moyen de préhension (22) selon la revendication 8, **caractérisée en ce que** la section de retenue (36) du moyen de préhension (22) est réalisée sous la forme d'une plaque métallique et en particulier d'une plaque d'acier.

10. Dispositif de préhension ou de serrage (10), en particulier préhenseur linéaire ou centré, comportant au moins une mâchoire de préhension (18) mobile guidée selon une des revendications 1 à 7 et/ou une mâchoire de préhension (18) comportant un moyen de préhension (22) selon une des revendications 8 ou 9.

11. Dispositif de préhension ou de serrage (10) selon la revendication (10), **caractérisé en ce que** la mâchoire de préhension est une mâchoire de base (12) guidée le long d'une ligne dans un carter de base du dispositif de serrage ou de préhension ou une mâchoire insérée (18) pouvant être installée sur une mâchoire de base (12) guidée de cette manière.
